# EUROPÄISCHE PATENTANMELDUNG

(11) **EP 0 732 565 A1**
(43) Veröffentlichungstag der Anmeldung: **18.09.1996**
(21) Anmeldenummer: 96103450.1
(22) Anmeldetag: 06.03.1996
(51) Int. Cl.: G01C 5/04

(54) **Messgerät zum Bestimmen der relativen Höhenlage eines Gegenstandes**

(30) Priorität: 13.03.1995 DE 19508382
(71) Anmelder: TRACTO-TECHNIK PAUL SCHMIDT SPEZIALMASCHINEN, 57368 Lennestadt (DE)
(72) Erfinder: Schmidt, Wolfgang, D-57399 Kirchhundem/Oberhundem (DE); Homborg, Hermann, D-57399 Kirchhundem/Heinsberg (DE); Püttmann, Franz-Josef, D-57368 Lennestadt (DE); Hesse, Alfons, D-57368 Lennestadt (DE)
(74) Vertreter: König, Reimar, Dr.-Ing.

(57) **Zusammenfassung**

Die Erfindung betrifft ein Meßgerät zum Bestimmen der relativen Höhenlage eines Gegenstandes insbesondere zum unterirdischen Bestimmen der Lage einer Bohrung oder eines Bohrkopfes, beispielsweise beim dynamischen Rammen mit einem flüssigkeitsgefüllten Schlauch, einem Druckaufnehmer, einem Ausgleichsgefäß in einem gegen die Umgebung abgeschlossenen, jedoch mit der Atmosphäre in Verbindung stehenden Ausgleichsraum innerhalb eines Meßkopfes.

## Beschreibung

Die Erfindung betrifft ein Meßgerät zum Bestimmen der relativen Höhenlage eines Gegenstandes insbesondere zum unterirdischen Bestimmen der Lage einer Bohrung oder eines Bohrkopfes, beispielsweise beim dynamischen Rammen.

Beim Herstellen von Erdbohrungen oder beim grabenlosen Verlegen von Leitungen läßt sich der Verlauf der Bohrung bzw. der Leitung oder die Lage des Bohrgerätes nicht ohne weiteres bestimmen. Bekannt ist die Verwendung von Sendern, die entweder im Bohrgerät fest installiert oder als separater Sender zum Bestimmen des tatsächlichen Verlaufs einer Horizontalbohrung verwendet werden.

Zum Bestimmen der relativen Höhenlage sind aus der deutschen Offenlegungsschrift 38 18 232 ein Verfahren und eine Meßvorrichtung zum laufenden Messen der relativen Höhenlage eines in das Erdreich einzutreibenden Langkörpers bekannt. Bei diesem Verfahren ist mit dem hinteren Ende eines Rammbohrgerätes das vordere Ende eines mit Flüssigkeit gefüllten Schlauches verbunden. Dieses Ende weist eine gekapselte Ausgleichsmembran auf, während das hintere Ende des Schlauches mit einem außerhalb und oberhalb der Bohrung angeordneten Druckaufnehmer verbunden ist. Wenn sich die relative Höhenlage des Rammbohrgerätes ändert, ändert sich auch der auf den Druckaufnehmer wirkende statische Druck und stellt direkt ein Maß für die relative Höhenlage der beiden Schlauchenden zueinander dar. Damit läßt sich während des Verlaufs einer Bohrung die relative Höhenlage des Bohrgeräts laufend ermitteln.

Der Einsatzbereich dieser Vorrichtung bzw. dieses Verfahrens ist jedoch begrenzt. Genaue Meßergebnisse lassen sich nur erzielen, wenn die Druckaufnahme des Schlauches nicht durch Störfaktoren beeinflußt und damit das Meßwertergebnis verfälscht wird. Dieser Fall der störungsfreien Meßwertaufnahme ist in der Praxis selten. In der Regel herrschen am Meßort unterschiedliche und wechselnde Druck- und Temperaturbedingungen, die die Meßergebnisse verfälschen und daher unbrauchbar machen. Einige Einsatzbereiche, wie beispielsweise eine Höhenmessung unter Wasser, scheiden bei der bekannten Vorrichtung aufgrund der direkten Einwirkung des Wassers auf die Meßvorrichtung von vornherein aus. Der auf die Ausgleichsmembran wirkende Wasserdruck verhindert korrekte Meßwerte.

Auch beim Einsatz mit pneumatischen Rammbohrgeräten läßt sich eine Meßwertverfälschung durch die aus dem Rammbohrgerät infolge der pneumatischen Hammerbetätigung austretende Abluft nicht vermeiden.

Der Erfindung liegt das Problem zugrunde, eine Meßvorrichtung zu schaffen, die von der Umgebung, insbesondere vom Umgebungsdruck unabhängige und damit exakte Meßergebnisse liefert und deren Einsatzbereich nicht auf Fälle mit für die Messung optimalen Umgebungsbedingungen beschränkt ist.

Der Lösung des Problems liegt das Prinzip zugrunde, einen druckneutralen Ausgleichsraum im Bereich der Messung, zumindest aber im Bereich, in dem die verfälschenden Umgebungsbedingungen herrschen, zu schaffen.

Im einzelnen wird das Problem durch ein Meßgerät mit einem flüssigkeitsgefüllten Schlauch mit einem Druckaufnehmer, vorzugsweise am einen Ende des Schlauches, und einem Ausgleichsgefäß, vorzugsweise am anderen Ende des Schlauches, gelöst, bei dem sich das Ausgleichsgefäß in einem bezüglich seiner Umgebung abgeschlossenen Ausgleichsraum befindet, der mittels einer Leitung an einem von den Störfaktoren freien Ort mit der Atmosphäre in Verbindung steht.

Die Erfindung gewährleistet ein umgebungsunabhängiges Messen, das auch einen Einsatz unter Wasser oder im Abluftbereich druckluftbetriebener Bohrgeräte oder Rohrverlegemaschinen erlaubt.

Dabei kann der Druckaufnehmer sowohl am vorderen Ende als auch am hinteren Ende des Schlauches angeordnet sein und je nach relativer Lage der beiden Schlauchenden zueinander im Unter- oder Überdruckbereich messen. Das Meßgerät erlaubt sowohl einmalige Messungen, beispielsweise der Tiefe einer unterirdisch verlaufenden Leitung, als auch kontinuierliche oder Intervallmessungen beispielsweise beim Verlegen von Rohren mit Rammbohrgeräten.

Die Verbindung des Ausgleichsraums zur Atmosphäre besteht vorzugsweise aus einem Überschlauch, der an seinem im Bereich der Störfaktoren liegenden Ende mit einer den Ausgleichsraum bildenden Hülse das Ausgleichsgefäß umschließt. Durch die Hülse wird das Ausgleichsgefäß vor die Messung störenden Faktoren geschützt. Bei einer besonderen Ausführungsform befindet sich anstelle des Ausgleichsgefäßes der Druckaufnehmer in der Hülse.

In der Hülse können sich Sensoren zur Ermittlung weiterer Meßgrößen befinden. So läßt sich beispielsweise die Temperatur am Meßort ermitteln und damit auch ein temperaturbedingt verfälschtes Meßergebnis der Höhenlage korrigieren. Weitere Informationen über den Meßort kann ein in der Hülse angeordnetes Neigungsmeßgerät liefern.

Besonders vorteilhaft ist eine Kombination des Meßgerätes mit einem Ortungssender. Der Ortungssender kann sich beispielsweise in der Hülse befinden und ermöglicht dann aufgrund der ermittelten horizontalen Lage zusammen mit der ermittelten Höhenlage eine genaue Aussage über die Lage der Hülse bzw. des mit der Hülse verbundenen Gerätes.

Bei einer weiteren vorteilhaften Ausführungsform befindet sich der Meßschlauch für die Höhenlage, vorzugsweise in Form von Wicklungen auf einer Trommel mit einem Drehgeber. Die Zahl der Umdrehungen der Trommel bei ausgelegtem Schlauch lassen sich dann zum Bestimmen der horizontalen Position des Schlauchendes und in Verbindung mit der Höhenmessung zum genauen Bestimmen des Meßortes und des Verlaufs einer unterirdischen Bohrung verwenden. Dies kann mittels eines Datenaufnahme- oder Anzeigegerätes erfolgen, welches die Daten sammelt, berechnet und gegebenenfalls mit Vergleichsdaten verarbeitet.

Das Meßgerät eignet sich besonders zum unterirdischen Vermessen von Rohrtrassen. Des weiteren läßt sich das Meßgerät sowohl für Bodenvermessungen jeglicher Art als auch für Gewässertiefenvermessungen oder Gebäudevermessungen verwenden.

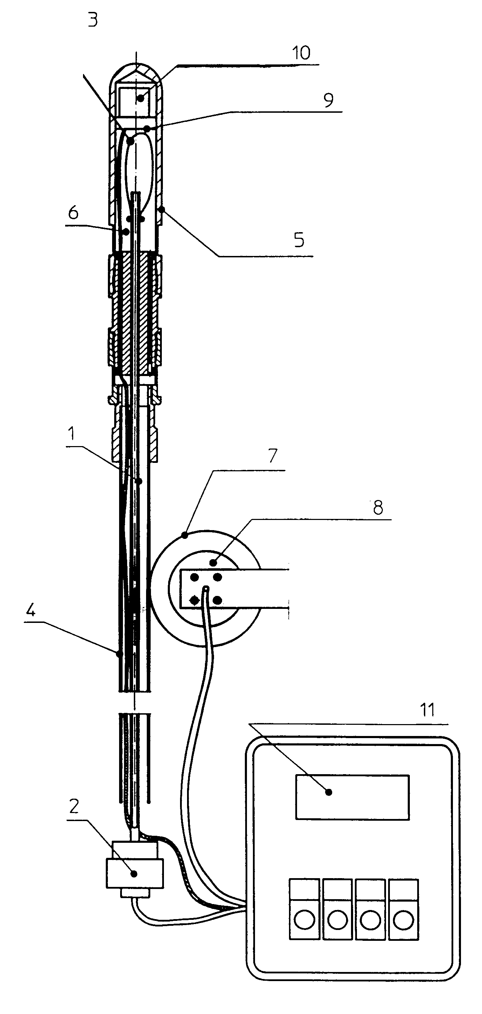

Im folgenden wird die Erfindung anhand eines in der Zeichnung dargestellten Ausführungsbeisplels des näheren erläutert.

Das Meßgerät besteht aus einem mit einer, vorzugsweise bei Minustemperaturen nicht gefrierenden Flüssigkeit gefüllten Schlauch 1 mit einem Druckaufnehmer 2, einem Ausgleichsgefäß 3, einem Überschlauch 4 und einem Meßkopf in Gestalt einer Hülse 5 sowie einem Registriergerät 9. Der Druckaufnehmer 2 und das Ausgleichsgefäß 3 befinden sich an den entgegengesetzten Enden des flüssigkeitsgefüllten Schlauchs 1. Die Hülse 5 befindet sich an dem am Meßort befindlichen Ende des Schlauches 1 und ist gasdicht mit dem Überschlauch 4 verbunden. Der Überschlauch 4 steht mit der Atmosphäre an einem von dem Störfaktorbereich entfernten Punkt in Verbindung. Die Hülse 5 schafft im Innern einen Ausgleichsraum 6 und schützt das in ihr befindliche Ende des Schlauches 1 mit dem Ausgleichsgefäß 3 vor die Messung verfälschenden äußeren Störfaktoren.

Zum Messen wird das Schlauchende an den Meßort gebracht. Dies kann beispielsweise eine bestimmte Position in einer Rohrleitung sein. Eine Höhendifferenz zwischen dem Druckaufnehmer 2 und dem Ausgleichsgefäß 3 bewirkt bei der im Schlauch 1 befindlichen Flüssigkeit eine Druckdifferenz, die sich über den Druckaufnehmer 2 ermitteln läßt und in direkter Relation zur relativen Höhenlage des Schlauchendes steht.

In der Hülse befinden sich des weiteren ein Sender 9 zur Bestimmung der Horizontallage des Schlauchendes sowie Sensoren 10 zur Ermittlung weiterer für die Messung relevanter Daten wie beispielsweise der Temperatur und der Neigung. Die Sensoren 10 sind mit einem Datenverarbeitungsgerät 11 verbunden.

Der Schlauch 1 mit dem Überschlauch 4 befindet sich auf einer Trommel 7, beispielsweise eines Haspels mit einem Drehgeber 8. Der Drehgeber 8 besitzt wie die Sensoren 10 eine Verbindung zu dem Datenverarbeitungsgerät 11. Aufgrund der mit Hilfe des Drehgebers 8 ermittelten abgewickelten Schlauchlänge läßt sich der Abstand zwischen dem am Meßort befindlichen Schlauchende und der Position der Trommel feststellen und zur Lagebestimmung des Schlauchendes oder zu deren Ergänzung auswerten.

Die Erfindung ergibt eine wesentliche Verbesserung der Genauigkeit des Meßergebnisses bei einer Lagebestimmung durch eine physikalische Abschirmung des Schlauchendes bzw. des Arbeitsraums 6 mittels der Hülse 5 sowie eine Neutralisierung der mit Hilfe der Sensoren 10 ermittelten Störfaktoren im Wege der Datenverarbeitung bei gleichzeitiger Erfassung einer zusätzlichen Meßdimension mit Hilfe des Senders 9 und/oder des Drehgebers 8.

## Patentansprüche

1. Meßgerät zur Lagebestimmung mit
- einem flüssigkeitsgefüllten Schlauch (1),
- einem Druckaufnehmer (2),
- einem Ausgleichsgefäß (3)
- in einem gegen die Umgebung abgeschlossenen, jedoch mit der Atmosphäre in Verbindungen stehenden Ausgleichsraum (6).

2. Meßgerät nach Anspruch 1, gekennzeichnet durch eine mit der Atmosphäre über eine Leitung (4) in Verbindung stehende Hülse (5).

3. Meßgerät nach einem der Ansprüche 1 und 2, gekennzeichnet durch in der Hülse (5) befindliche Sensoren (10).

4. Meßgerät nach einem der Ansprüche 1 bis 3, gekennzeichnet durch einen in der Hülse (5) befindlichen Ortungssender (9).

5. Meßgerät nach einem der Ansprüche 1 bis 4, dadurch gekennzeichnet, daß der Schlauch (1) über eine Trommel (7) mit einem Drehgeber (8) geführt ist, und der Drehgeber die Drehungen der Trommel beim Auslegen des Schlauches (1) ermittelt.

6. Meßgerät nach einem der Ansprüche 1 bis 5, gekennzeichnet durch ein die Meßwertsignale auswertendes Datenverarbeitungsgerät (10).
